# EUROPEAN PATENT SPECIFICATION

(11) **EP 3 514 249 B1**
(45) Date of publication and mention of the grant of the patent: **24.03.2021**
(21) Application number: 17851032.7
(22) Date of filing: 15.09.2017
(51) Int. Cl.: C21C 7/10, C21D 8/02, C22B 9/18, C22B 9/20, C22C 19/03, C22C 19/05, C22C 30/00, C22C 38/00, C22C 38/02, C22C 38/04, C22C 38/08, H01J 9/14

(54) **METAL MASK MATERIAL AND METHOD FOR MANUFACTURING SAME**
METALLMASKENMATERIAL UND VERFAHREN ZUR HERSTELLUNG DAVON
MATÉRIAU DE MASQUE MÉTALLIQUE ET PROCÉDÉ DE FABRICATION DUDIT MATÉRIAU DE MASQUE MÉTALLIQUE

(30) Priority: 15.09.2016 JP 2016180383; 15.09.2016 JP 2016180384
(43) Date of publication of application: 24.07.2019
(73) Proprietor: Hitachi Metals, Ltd., Tokyo 108-8224 (JP)
(72) Inventor: OMORI, Akihiro, Yasugi-shi Shimane 692-8601 (JP); HADANO, Yuuichi, Yasugi-shi Shimane 692-8601 (JP)
(74) Representative: Becker & Kurig Partnerschaft Patentanwälte PartmbB
(86) International application number: PCT/JP2017/033540
(87) International publication number: WO 2018/052135

(56) References cited:
- DE-A1- 4 109 550
- JP-A- H 073 350
- JP-A- 2002 069 543
- JP-A- 2003 221 627
- JP-A- 2016 135 505
- US-A- 5 127 965
- US-A- 5 234 512
- US-A- 5 391 241

## Description

### [Technical Field]

The present invention relates to a metal mask material and a method for manufacturing the same.

### [Background Art]

For example, when an organic EL display is manufactured, a metal mask is used for deposition on a substrate and generation of color patterning. For such a metal mask, a method of performing etching processing on a metal mask material is known as one of methods for forming an opening. An Fe-Ni alloy thin plate or the like is used as the metal mask material. However, when there are many segregations of nonmetallic inclusions, Ni, and the like on the Fe-Ni alloy thin plate, the progress of etching becomes nonuniform, and impairment in the etching precision is caused. Therefore, it is known that reducing nonmetallic inclusions is effective for improving the etching processability and various proposals have been made. For example, Japanese Unexamined Patent Application Publication No. 2002-069543 discloses a method of producing an Fe-Ni type thin plate in which, in order to improve etching properties and press formability, the upper surface of a molten steel from which C is removed by preliminary refining is heated and slag refining is performed, and then the steel is cast to form a consumable electrode, the consumable electrode is subjected to vacuum arc remelting, and the steel ingot is then subjected to hot processing and cold processing to form a thin plate. In addition, Japanese Unexamined Patent Application Publication No. 2000-090824 discloses a method of producing a metal partition for an image display device in which, in order to address problems of inclusions and pinholes in materials, an Fe-Ni type alloy molten metal subjected to vacuum melting or vacuum refining is formed as an ingot, and the ingot is then subjected to hot processing and then cold processing to form a thin plate, and the thin plate is processed into a shape of a partition by etching.

DE 41 09 550 A1 discloses a cold-rolled steel sheet which is made of an Fe-Ni alloy and can be used as a material for a shadow mask of a high-definition television set. US 5,391,241 relates to a Fe-Ni alloy cold-rolled sheet consisting essentially of 30 to 45 wt.% nickel, 0.1 to 1 wt. % manganese, 0.003 to 0.03 wt% aluminum and the balance being iron and incidental impurities. US 5,234,512 disclose a Fe-Ni alloy sheet for a shadow mask consisting essentially of nickel from 38 to 38 wt. %, silicon from 0.01 to 0.09 wt %, aluminum from 0.002 to 0.020 wt. %, calcium from 0.0002 to 0.0020 wt. %, magnesium from 0.0003 to 0.0020 wt. %, with the sum of calcium and half of the magnesium mount being from 0.0005 to 0.0025 wt. %, balance being iron and incidental impurities. US 5,127,965 discloses a Fe-Ni alloy sheet for a shadow mask, consisting essentially of nickel from 34 to 38 wt. %, silicon from 0.01 to 0.15 wt. %, manganese from 0.01 to 1.00 wt. %, the balance being iron and incidental impurities. JP 2003 221627A discloses a manufacturing method of maraging steel.

### [Summary of Invention]

### [Technical Problem]

In order to produce higher-definition products, it is necessary to form patterns with higher precision on a mask to be used. In order to respond to the demand, further improvement in etching properties is also required for a metal mask material. The invention in Japanese Unexamined Patent Application Publication No. 2000-090824 described above is an invention effective for refining nonmetallic inclusions. However, even if the configuration of Japanese Unexamined Patent Application Publication No. 2000-090824 is fulfilled, it is insufficient for higher precision etching in some cases. An objective of the present invention is to provide a metal mask material that can significantly improve etching processability and a manufacturing method through which it is possible to obtain the above metal mask material.

### [Solution to Problem]

That is, an aspect of the present invention is a metal mask material according to claim 1, having a composition including, by mass%, C: 0.01% or less, Si: 0.5% or less, Mn: 1.0% or less, and Ni: 30 to 50%, with the balance being made up of Fe and inevitable impurities,
wherein, per 1 g of the metal mask material,
there are 2.0 or less oxide-based nonmetallic inclusions with a diameter exceeding 10.0 µm, and
there are 20.0 or less oxide-based nonmetallic inclusions with a diameter of 6.0 to 10.0 µm, and
wherein the metal mask material has a thin plate shape with a plate thickness of 0.25 mm or less.

Another aspect of the present invention is a method for manufacturing a metal mask material according to claim 2, having a composition including, by mass%, C: 0.01% or less, Si: 0.5% or less, Mn: 1.0% or less, and Ni: 30 to 50%, with the balance being made up of Fe and inevitable impurities, including:
a consumable electrode producing process of producing a first consumable electrode for remelting according to vacuum melting;
a first remelting process of remelting the first consumable electrode in a template and producing a second remelting consumable electrode for second remelting; and
a second remelting process of remelting the second remelting consumable electrode in a template to obtain a steel ingot,
wherein a ratio D1/D2 of a diameter D1 of the second remelting consumable electrode to an inner diameter D2 of the template used for the second remelting is 0.80 to 0.95, and
wherein the steel ingot after the second remelting process is subjected to hot rolling and cold rolling and a thin plate-like material with a plate thickness of 0.25 mm or less is obtained.

Per 1 g of the material after the cold rolling,
there are 2.0 or less oxide-based nonmetallic inclusions with a diameter exceeding 10.0 µm and there are 20.0 or less oxide-based nonmetallic inclusions with a diameter of 6.0 to 10.0 µm.

Preferably, a total rolling reduction ratio during the cold rolling is 90% or more.

Preferably, the first remelting process and the second remelting process are performed by vacuum arc remelting.

### [Advantageous Effects of Invention]

According to the present invention, it is possible to obtain a metal mask material that can be etched with high precision. In addition, it is possible to significantly refine oxide-based nonmetallic inclusions in the metal mask material and significantly reduce the number of inclusions.

### [Description of Embodiments]

Hereinafter, the present invention will be described in detail. Here, a metal mask material of the present invention includes a steel strip wound in a coil shape and a rectangular thin plate produced by cutting the steel strip. The plate thickness of the metal mask material of the present invention is 0.25 mm or less, preferably, the plate thickness is 0.15 mm or less, more preferably the plate thickness is 0.1 mm or less, and most preferably the plate thickness is 0.05 mm or less. The metal mask material of the present invention is an Fe-Ni alloy having a chemical composition including, by mass%, C: 0.01% or less, Si: 0.5% or less, Mn: 1.0% or less, and Ni: 30 to 50%, with the balance being made up of Fe and inevitable impurities. The reasons for this are as follows.

### [C: 0.01 mass% or less]

C is an element that influences etching properties. Since etching properties deteriorate when an excess amount of C is included, the upper limit of C is set to 0.01%. There may be 0% of C, but it is incorporated in a small amount in a production process, and thus the lower limit is not particularly limited.

### [Si: 0.5 mass% or less, Mn: 1.0 mass% or less]

Si and Mn are generally used for the purpose of deoxidation and are contained in a small amount in the Fe-Ni alloy. However, when an excessive amount thereof is contained, since segregation easily occurs, Si: 0.5% or less, and Mn: 1.0% or less are set. Preferably, an amount of Si and an amount of Mn are Si: 0.1% or less, and Mn: 0.5% or less. The lower limits of Si and Mn can be set to, for example, 0.01% for Si and 0.05% for Mn.

### [Ni: 30 to 50 mass%]

Ni is an element that has a function of allowing adjustment of a coefficient of thermal expansion and greatly influences low thermal expansion characteristics. Since there is no effect of lowering a coefficient of thermal expansion when a content is less than 30% or exceeds 50%, a range for Ni is set to 30 to 50%. Preferably, an amount of Ni is 32 to 45%.

Components other than the above elements are Fe and inevitable impurities.

The metal mask material of the present invention includes 2.0 or less oxide-based nonmetallic inclusions with a diameter exceeding 10.0 µm per 1 g of a metal mask material. In this manner, when there are 2.0 or less oxide-based nonmetallic inclusions with a diameter exceeding 10.0 µm, it is possible to uniformly form a higher definition and finer etching pattern. When the number of oxide-based nonmetallic inclusions with a diameter exceeding 10.0 µm is larger than 2.0, there is a high likelihood of the etching progress becoming nonuniform and dimension errors occurring due to detachment of inclusions during etching. More preferably, the number of oxide-based nonmetallic inclusions with a diameter exceeding 10.0 µm is less than 1.0.

In the metal mask material of the present invention, the number of oxide-based nonmetallic inclusions with a diameter of 6.0 to 10.0 µm is 20.0 or less per 1 g of a metal mask material. The number of oxide-based nonmetallic inclusions is preferably 15.0 or less and more preferably 10.0 or less. Accordingly, when the number of oxide-based nonmetallic inclusions is significantly reduced compared to in a metal mask material of the related art, it is possible to greatly suppress nonuniform progress of etching processing and it is possible to perform etching processing with high precision. When the number of oxide-based nonmetallic inclusions with a diameter of 6.0 to 10.0 µm exceeds 20.0 per 1 g, there is a high likelihood of the etching progress becoming nonuniform and dimension errors occurring due to detachment of inclusions during etching. In order to check the size and number described above, for example, 1 g of a sample made of the prepared material is collected, melted in a mixed acid solution or the like, and filtered through a filter, and the residue made of oxides in a part through which the filtrate on the filter has passed is observed under a scanning electron microscope (SEM) for measurement. An equivalent circle diameter is calculated from the outer shape of oxide-based nonmetallic inclusions in the observation image of the scanning electron microscope, and the equivalent circle diameter is defined as a "diameter" in the present invention. The equivalent circle diameter refers to a diameter (area equivalent circle diameter) of a circle having the same circle area as an area of the observed oxide-based nonmetallic inclusion. Here, during measurement, an amount of material exceeding 1 g (for example, 2 to 3 g) may be melted, and oxide-based nonmetallic inclusions per 1 g may be then calculated from the number of oxide-based nonmetallic inclusions obtained by filtration. In this case, a decimal number part may be included in the number. Here, in the present invention, there is no restriction on the number of inclusions with a diameter less than 6.0 µm. This is because inclusions with a size less than 6.0 µm are so fine that they are unlikely to greatly influence etching processability.

Preferably, the oxide-based nonmetallic inclusions in the present invention are mainly made of an Al-Mg-0 (MgO·Al₂O₃ type) spinel type inclusion. This is because it is thought that, since this spinel type inclusion is softer than an oxide-based nonmetallic inclusion such as an alumina-based (Al₂O₃) inclusion, when plastic deformation is performed on a material according to a rolling process or the like, it is possible to promote refinement according to crushing and fragmentation. Specifically, it is preferable for spinel type inclusions to have a numerical proportion of 50% or more among oxide-based nonmetallic inclusions. Here, the composition of the oxide-based nonmetallic inclusions can be measured using a scanning electron microscope (SEM), an electron beam microanalyzer (EPMA), and the like.

Next, a method for manufacturing a metal mask material of the present invention will be described.

### (Consumable electrode producing process)

First, in the present invention, a first consumable electrode for remelting is produced according to vacuum melting. In melting in this case, in order to minimize an increase in oxides in the first consumable electrode due to a reaction between oxygen or nitrogen in the atmosphere and a molten steel, it is preferable to produce a consumable electrode under a vacuum atmosphere as in a vacuum induction melting method (VIM). Here, the first consumable electrode in this case preferably has a cylindrical shape in order to correspond to a columnar template that is generally used during remelting to be described below.

### (First remelting process)

Subsequently, the obtained first consumable electrode is remelted in a template, and a second remelting consumable electrode for second remelting to be described below is produced. According to the first remelting process, it is possible to reduce segregation in the first consumable electrode and to remove nonmetallic inclusions to some extent. In the first remelting process, vacuum arc remelting (VAR) or electroslag remelting (ESR) can be applied. However, preferably, VAR through which it is possible to further reduce an amount of oxygen in the first consumable electrode is applied.

### (Second remelting process)

In the present invention, the second remelting consumable electrode (hereinafter simply referred to as a second consumable electrode) obtained according to the first remelting process is remelted in a template and thereby a steel ingot is obtained. In addition, a feature of the present invention is that, during a second remelting process, a ratio D1/D2 of a diameter D1 of the second consumable electrode (a diameter of the second remelting consumable electrode) to an inner diameter D2 of the template (an inner diameter of a template in which the steel ingot is cast in the second remelting process) is adjusted to 0.80 to 0.95. In the second remelting process, since oxide-based nonmetallic inclusions with a large size remaining in the second consumable electrode are removed and the occurrence of shrinkage cavities and pores is reduced, it is possible to further reduce segregation and it is possible to also significantly reduce the number of nonmetallic inclusions. In addition, when D1/D2 is adjusted to be within the above range, heating is uniformly performed on the steel ingot by arc discharging. Therefore, it is possible to minimize the growth of a solidified shell formed from the outer circumferential side of a molten steel pool and minimize formation of coarse inclusions due to aggregation of inclusions on the solidified shell. Preferably, the lower limit of D1/D2 is 0.85. When D1/D2 is less than 0.80, heating of the steel ingot by arc discharging is nonuniformly performed, and the inclusions in the steel ingot are caught on the above solidified shell, aggregated and coarsened, and are likely to remain in the steel ingot. In addition, when D1/D2 exceeds 0.95, a space between the second consumable electrode and a template wall becomes too narrow. Therefore, an arc discharge is generated between the second consumable electrode and the template wall, and damage to the template is caused. In the second remelting process, vacuum arc remelting (VAR) or electroslag remelting (ESR) can also be applied. However, it is preferable to apply VAR in which an amount of oxygen in the consumable electrode is further reduced, and removal of coarse oxide-based nonmetallic inclusions and a segregation reduction effect can be expected. Here, D1 and D2 may be measured at any part with a cylindrical shape, and in the case of a tapered cylindrical shape (a shape in which a radius of the upper surface and a radius of the bottom surface are different), an average value of the radius of the upper surface and the radius of the bottom surface can be used.

In the second remelting process of the present invention, a degree of vacuum in a melting furnace is preferably 5 Pa or less. Accordingly, it is possible to improve efficiency of removing gas components such as nitrogen in the steel ingot and obtain a cleaner steel ingot with less segregation and inclusions. Preferably, a degree of vacuum in the melting furnace is 4 Pa or less. In addition, the lower limit is not particularly limited, and in consideration of practicality, for example, a degree of vacuum of about 0.001 Pa can be used.

In the present invention, the steel ingot obtained in the second remelting process is subjected to a hot rolling process and a cold rolling process, and thereby a thin plate with a plate thickness of 0.25 mm or less can be obtained. Preferably, the plate thickness is 0.15 mm or less, more preferably the plate thickness is 0.1 mm or less, and most preferably the plate thickness is 0.05 mm or less. It is thought that, according to the above rolling process, the nonmetallic inclusions in the steel ingot are fragmented and crushed, and thus refinement of the nonmetallic inclusions is caused to further progress. As necessary, a homogenization heat treatment may be performed at about 900 to 1,300 °C in the step before cold rolling, and in the cold rolling process, in order to reduce the hardness of the cold rolled material, annealing at 800 to 1,050 °C can be performed once or more. An annealing time in this case can be selected within the range of 30 to 150 seconds. In the cold rolling process, a polishing process of removing scale on the surface and an ear trimming process of removing an off-gauge part (a part with a thick plate thickness) at the end of the material and removing an ear wave part generated in rolling processing may be performed. As a furnace used during the heat treatment process, existing furnaces such as a vertical type furnace and a horizontal type furnace (a horizontal furnace) may be used. However, in order to prevent breaking while passing a plate through and further increase the steepness of the material, a vertical type furnace in which deflection due to an own weight is unlikely to occur is preferably used. In addition, in order to minimize shape defects occurring in the metal mask material after finish rolling, a shape correction using distortion relief annealing, a tension leveler, or the like may be performed.

In the manufacturing method in the present invention, a total rolling reduction ratio in the cold rolling process is preferably 90% or more. Accordingly, it is possible to promote refinement of soft spinel type inclusions according to crushing and fragmentation. More preferably, the total rolling reduction ratio is 94% or more. The upper limit is not particularly limited, and it can be set to, for example, 99%.

### Examples

The present invention will be described in further detail with reference to the following examples.

An Fe-Ni alloy raw material was melted by VIM, and five first consumable electrodes were produced. Among them, three first consumable electrodes were subjected to first remelting by VAR to form second consumable electrodes, and then additionally subjected to second remelting by VAR, and thereby steel ingots of examples of the present invention (No. 1 to No. 3) were produced. In this case, a ratio D1/D2 of a diameter D1 of the second consumable electrode to an inner diameter D2 of the template was about 0.91. The remaining two first consumable electrodes were subjected to only first remelting under the same conditions as in Nos. 1 and 2, and thereby steel ingots of comparative examples (Nos. 11 and No. 12) were produced. The chemical compositions of the steel ingots of the examples of the present invention and the comparative examples are shown in Table 1. In this case, a degree of vacuum in the furnace during the first remelting and the second remelting was 4 Pa or less. The obtained steel ingots of the examples of the present invention and the comparative examples were subjected to a finishing process to have a thickness of 2 to 3 mm according to hot forging-hot rolling, and were then subjected to cold rolling including annealing twice at a temperature of 950 to 1,050 °C, and an Fe-Ni alloy cold rolled material with a thickness of 0.1 mm (approximately a rolling reduction ratio of 95% or more) was produced.

**[Table 1]**

| (mass%) | | | | | |
|---|---|---|---|---|---|
| Sample No. | c | Si | Mn | Ni | Balance |
| 1,2,3 | 0.002 | 0.024 | 0.24 | 36.1 | Fe and inevitable impurities |
| 11, 12 | 0.002 | 0.022 | 0.28 | 35.9 | Fe and inevitable impurities |

Subsequently, in the obtained samples, the composition, size, and number of oxide-based nonmetallic inclusions were measured. Samples of 1 g were collected from the cold rolled materials of Nos. 1, 2, 3, 11, and 12, melted in a mixed acid solution or the like, and filtered through a filter, oxide-based nonmetallic inclusions remaining on the filter were observed under an SEM, and the composition, size, and number of oxide-based nonmetallic inclusions were measured. Here, the size of the oxide-based nonmetallic inclusion was measured as a diameter (area equivalent circle diameter) of a circle having the same circle area as an area of the observed oxide-based nonmetallic inclusion. The results are shown in Table 2. The composition of the oxide-based nonmetallic inclusions was determined from backscattered electron images of the SEM. In addition, nonmetallic inclusions with a size of 6.0 µm or more were examined for the number of oxide-based nonmetallic inclusions. This is because inclusions with a size less than 6.0 µm were so fine that they were unlikely to greatly influence etching processability.

**[Table 2]**

| Sample No. | Number of oxide-based nonmetallic inclusions exceeding 10.0 µm | Size of oxide-based nonmetallic inclusion (maximum value) [µm] | Number of oxide-based nonmetallic inclusions (6.0 to 10.0 µm) |
|---|---|---|---|
| 1 | 0 | 7.9 | 6 |
| 2 | 0 | 8.8 | 2 |
| 3 | 1 | 10.1 | 6 |
| 11 | 10 | 12.2 | 95 |
| 12 | 7 | 11.4 | 110 |

According to measurement, in the oxide-based nonmetallic inclusions of samples No. 1 to No. 3 as the examples of the present invention and samples No. 11 and No. 12 as the comparative examples, Al-Mg-O (MgO·Al₂O₃ type) spinel type inclusions had a proportion of 50% or more with respect to all inclusions. In addition, according to the results in Table 2, in the samples of the examples of the present invention, there were no large oxide-based nonmetallic inclusions exceeding 10.0 µm in No. 1 and No. 2, and only one inclusion slightly exceeding 10.0 µm was observed in No. 3. In addition, it was confirmed that the size of the oxide-based nonmetallic inclusions in the examples of the present invention was smaller than those of the comparative examples. It was confirmed that, regarding the number of oxide-based nonmetallic inclusions of 6.0 µm or more, in the samples of the examples of the present invention, the number of oxide-based nonmetallic inclusions was reduced to a value of about 7% or less of that of the samples of the comparative examples.

## Claims

1. A metal mask material, the metal mask material is **characterised by** having a composition including, by mass%, C: 0.01% or less, Si: 0.5% or less, Mn: 1.0% or less, and Ni: 30 to 50%, with the balance being made up of Fe and inevitable impurities,
wherein, per 1 g of the metal mask material,
there are 2.0 or less oxide-based nonmetallic inclusions with an area equivalent circle diameter exceeding 10.0 µm, and
there are 20.0 or less oxide-based nonmetallic inclusions with an area equivalent circle diameter of 6.0 to 10.0 µm, and
wherein the metal mask material has a thin plate shape with a plate thickness of 0.25 mm or less, wherein the oxide-based nonmetallic inclusions are measured with the method defined in the description.

2. A method for manufacturing a metal mask material, the method for manufacturing a metal mask material is **characterised in that** the metal mask material has a composition including, by mass%, C: 0.01% or less, Si: 0.5% or less, Mn: 1.0% or less, and Ni: 30 to 50%, with the balance being made up of Fe and inevitable impurities, the method for manufacturing a metal mask material comprises:
a consumable electrode producing process of producing a first consumable electrode for remelting according to vacuum melting;
a first remelting process of remelting the first consumable electrode in a template and producing a second remelting consumable electrode for second remelting; and
a second remelting process of remelting the second remelting consumable electrode in a template to obtain a steel ingot,
wherein a ratio D1/D2 of a diameter D1 of the second remelting consumable electrode to an inner diameter D2 of the template used for the second remelting is 0.80 to 0.95, and
wherein the steel ingot after the second remelting process is subjected to hot rolling and cold rolling and a thin plate-like material with a plate thickness of 0.25 mm or less is obtained,
wherein, per 1 g of the material after the cold rolling,
there are 2.0 or less oxide-based nonmetallic inclusions with an area equivalent circle diameter exceeding 10.0 µm and there are 20.0 or less oxide-based nonmetallic inclusions with an area equivalent circle diameter of 6.0 to 10.0 µm, wherein the oxide-based nonmetallic inclusions are measured with the method defined in the description.

3. The method for manufacturing a metal mask material according to claim 2,
wherein a total rolling reduction ratio during the cold rolling is 90% or more.

4. The method for manufacturing a metal mask material according to claim 2 or 3,
wherein the first remelting process and the second remelting process are performed by vacuum arc remelting.

## Patentansprüche

1. Metallmaskenmaterial, wobei das Metallmaskenmaterial **dadurch gekennzeichnet ist, dass** es eine Zusammensetzung aufweist, die in Masse-% C: 0,01 % oder weniger, Si: 0,5% oder weniger, Mn: 1,0 % oder weniger, und Ni: 30 bis 50 % einschließt, wobei der Rest aus Fe und unvermeidlichen Verunreinigungen zusammengesetzt ist,
wobei pro 1 g des Metallmaskenmaterials
2,0 oder weniger Oxid-basierte nichtmetallische Einschlüsse mit einem flächenäquivalenten Kreisdurchmesser von mehr als 10,0 µm vorhanden sind, und
20,0 oder weniger Oxid-basierte nichtmetallische Einschlüsse mit einem flächenäquivalenten Kreisdurchmesser von 6,0 bis 10,0 µm vorhanden sind, und
wobei das Metallmaskenmaterial eine dünne Plattenform mit einer Plattendicke von 0,25 mm oder weniger aufweist, wobei die Oxid-basierten nichtmetallischen Einschlüsse gemessen werden mit dem Verfahren, definiert in der Beschreibung.

2. Verfahren zum Herstellen eines Metallmaskenmaterials, wobei das Verfahren zum Herstellen eines Metallmaskenmaterials **dadurch gekennzeichnet ist, dass** das Metallmaskenmaterial eine Zusammensetzung aufweist, die, in Masse-% einschließt, C: 0,01% oder weniger, Si: 0,5% oder weniger, Mn: 1,0 % oder weniger, und Ni: 30 bis 50 %, wobei der Rest aus Fe und unvermeidlichen Verunreinigungen zusammengesetzt ist, wobei das Verfahren zum Herstellen eines Metallmaskenmaterials umfasst:
ein verbrauchbare Elektrode-Herstellungsverfahren zum Herstellen einer ersten verbrauchbaren Elektrode zum Umschmelzen gemäß Vakuumschmelzen,
ein erstes Umschmelzverfahren zum Umschmelzen der ersten verbrauchbaren Elektrode in einer Schablone und zum Herstellen einer zweiten Umschmelz-verbrauchbaren Elektrode zum zweiten Umschmelzen; und
ein zweites Umschmelzverfahren zum Umschmelzen der zweiten Umschmelz-verbrauchbaren Elektrode in einer Schablone, um einen Stahlblock zu erhalten,
wobei ein Verhältnis D1/D2 eines Durchmessers D1 der zweiten Umschmelz-verbrauchbaren Elektrode zu einem Innendurchmesser D2, der Schablone, verwendet für das zweite Umschmelzen 0,80 bis 0,95 beträgt, und
wobei der Stahlblock nach dem zweiten Umschmelzverfahren einem Warmwalzen und Kaltwalzen unterzogen wird und ein dünnes plattenförmiges Material mit einer Plattendicke von 0,25 mm oder weniger erhalten wird,
wobei pro 1 g des Materials nach dem Kaltwalzen
2,0 oder weniger Oxid-basierte nichtmetallische Einschlüsse mit einem flächenäquivalenten Kreisdurchmesser von mehr als 10,0 µm vorhanden sind und 20,0 oder weniger Oxid-basierte nichtmetallische Einschlüsse mit einem flächenäquivalenten Kreisdurchmesser von 6,0 bis 10,0 µm vorhanden sind, wobei die Oxid-basierten nichtmetallischen Einschlüsse gemessen werden mit dem Verfahren, definiert in der Beschreibung

3. Verfahren zum Herstellen eines Metallmaskenmaterials gemäß Anspruch 2,
wobei ein gesamtes Walzreduktionsverhältnis während des Kaltwalzens 90 % oder mehr beträgt.

4. Verfahren zur Herstellung eines Metallmaskenmaterials gemäß Anspruch 2 oder 3, wobei das erste Umschmelzverfahren und das zweite Umschmelzverfahren durch Vakuumlichtbogenumschmelzen durchgeführt werden.

## Revendications

1. Matériau de masque métallique, ce matériau de masque métallique étant **caractérisé par le fait qu'**il a une composition incluant, en pourcentage de la masse, du C : 0,01 % ou moins, Si : 0,5 % ou moins, Mn : 1,0 % ou moins et Ni : 30 à 50 %, le reste étant composé de Fe et d'impuretés inévitables,
dans lequel, par 1 g de matériau de masque métallique,
il y a 2,0 ou moins d'inclusions non métalliques à base d'oxyde ayant un diamètre de cercle en équivalent en superficie excédant 10,0 µm, et
il y a 20,0 ou moins d'inclusions non métalliques à base d'oxyde avec un diamètre de cercle en équivalent en superficie de 6,0 à 10,0 µm, et
le matériau de masque métallique a une forme de plaque mince ayant une épaisseur de plaque de 0,25 mm ou moins, les inclusions non métalliques à base d'oxyde étant mesurées avec le procédé défini dans la description.

2. Procédé de fabrication d'un matériau de masque métallique, ce procédé de fabrication d'un matériau de masque métallique étant **caractérisé en ce que** le matériau de masque métallique a une composition incluant, en pourcentage de la masse, du C : 0,01 % ou moins, Si : 0,5 % ou moins, Mn : 1,0 % ou moins, et Ni : 30 à 50 %, le reste étant composé de Fe et d'impuretés inévitables, ce procédé de fabrication d'un matériau de masque métallique comprenant :
un processus de production d'électrode consommable pour la production d'une première électrode consommable pour une refusion d'après une fusion sous vide ;
un premier processus de refusion pour la refusion de la première électrode consommable dans un modèle et la production d'une seconde électrode consommable de refusion pour une seconde refusion ; et
un second processus de refusion pour la refusion de la seconde électrode de consommable de refusion dans un modèle pour obtenir un lingot d'acier,
un rapport D1/D2 entre un diamètre D1 de la seconde électrode consommable de refusion et un diamètre intérieur D2 du modèle utilisé pour la seconde refusion étant de 0,80 à 0,95, et
le lingot d'acier étant, après le second processus de refusion, soumis à un laminage à chaud et à un laminage à froid et un matériau en forme de plaque mince ayant une épaisseur de plaque de 0,25 mm ou moins étant obtenu,
dans lequel, par 1 g du matériau, après le laminage à froid,
il y a 2,0 ou moins d'inclusions non métalliques à base d'oxyde ayant un diamètre de cercle en équivalent de superficie excédant 10,0 µm et il y a 20,0 ou moins d'inclusions non métalliques à base d'oxyde avec un diamètre de cercle en équivalent de superficie de 6,0 à 10,0 µm, les inclusions non métalliques à base d'oxyde étant mesurées avec le procédé défini dans la description.

3. Procédé de fabrication d'un matériau de masque métallique selon la revendication 2,
dans lequel un rapport de réduction de laminage total pendant le laminage à froid est de 90 % ou plus.

4. Procédé de fabrication d'un matériau de masque métallique selon la revendication 2 ou 3,
dans lequel le premier processus de refusion et le second processus de refusion sont réalisés par refusion à arc sous vide.
